# EUROPEAN PATENT SPECIFICATION

(11) **EP 2 449 309 B1**
(45) Date of publication and mention of the grant of the patent: **01.10.2014**
(21) Application number: 10729796.2
(22) Date of filing: 29.06.2010
(51) Int. Cl.: F23G 5/027, F23G 5/04, F23G 5/16

(54) **WASTE MANAGEMENT SYSTEM**
MÜLLENTSORGUNGSSYSTEM
SYSTEME DE GESTION DE DECHETS

(30) Priority: 29.06.2009 GB 0911220
(43) Date of publication of application: 09.05.2012
(73) Proprietor: Coldunell Limited, Esher, Surrey KT10 9QD (GB)
(72) Inventor: Sweeney, John Gerard, Uxbridge, Middlesex UB8 2GH (GB)
(74) Representative: Higgs, Jonathan
(86) International application number: PCT/EP2010/003848
(87) International publication number: WO 2011/000513

(56) References cited:
- WO-A1-99/10682
- WO-A1-2006/117824
- WO-A2-2008/072052
- GB-A- 2 378 498
- US-A- 4 890 563

## Description

The present invention relates to a waste management system and to a power generation system including the waste management system. The waste management system of the present invention generally relates to waste materials which include combustible matter.

The clean, effective and environmentally-friendly disposal of domestic and industrial waste materials, including combustible waste materials, provides on-going challenges for industry, national governments and local authorities.

Waste disposal methods such as burying waste in landfills at municipal tips have many drawbacks. These include the need for large tracts of land which may otherwise be better utilised, the prospect of wind-blown litter, the attraction to rats and other vermin which may provide a health risk to the community, unpleasant odours and the generation of greenhouse gases such as methane which may result from the biodegradation of waste.

Other disposal methods include incineration which involves the combustion of the waste material. Although often convenient for the disposal of hazardous materials, incineration is an unpopular method of waste disposal where there is the prospect of toxic gases and other pollution being released into the atmosphere. Traditional incinerators are also known to have large carbon footprints and high profiles.

As an alternative to the waste disposal methods outlined above, the use of combustible waste materials as fuels for generating energy is known. In a world of diminishing fossil fuel reserves, the uncertainty of regular supplies of gas and oil often due to geopolitical factors, and the environmental risks posed by nuclear energy, generating energy from waste materials is considered an attractive field of endeavour. This is because it addresses both the problems of waste management and the provision of alternative fuel sources. However, many of the known methods are resource, cost and energy inefficient. Accordingly, alternative means of waste management and the conversion of waste materials into sources of energy have been sought which are resource, cost and energy efficient. The present invention aims to achieve some of these means.

According to the present invention there is provided an integrated waste management system, comprising:
a source of a combustible waste material;
a separator for separating the combustible waste material from a recyclable material;
an airless drier for drying the combustible waste material to generate a pyrolysis feedstock;
a pyrolyser for pyrolysing the pyrolysis feedstock to form char and pyrogas;
a gasifier for converting the char into syngas, and
a means for supplying heated steam output from the airless drier generated during pyrolysis feedstock generation to the gasifier.

Further according to the invention, there is provided an integrated method of waste management comprising:
(a) providing a source of a combustible waste material;
(b) separating the combustible waste material from a recyclable material present in the source;
(c) drying the combustible waste material in an airless drier to generate a dried pyrolysis feedstock;
(d) pyrolysing the dried pyrolysis feedstock to form char and pyrogas;
(e) converting the char into syngas in a gasifier, and
(f) supplying heated steam output from the airless drier generated during pyrolysis feedstock generation to the gasifier.

The integrated system and method of waste management of the present invention provide a cost and energy efficient means of processing industrial and domestic waste materials, whereby combustible materials suitable for downstream conversion into energy are obtained and waste materials not considered suitable for energy conversion, but which are recyclable, can be separated and processed separately in a recycling plant. Accordingly, minimal compromise of eco-friendly recycling efforts can be achieved with the present invention thus contributing to the overall ecological benefits of waste material processing.

Pyrolytic processes are generally more efficient the lower the moisture content of the material being pyrolysed. In the present invention, the use of an airless drier provides significant overall energy savings in terms of running the system, as approximately 30% less energy is required to operate an airless drier per unit weight of material being dried compared to a conventional air drier. Furthermore, reduced waste material drying times typically of 40 to 50 minutes less are required with the airless drier compared with other forms of drying, thereby adding to the overall efficiency of the system in terms of processing times.

Further according to the invention, there is provided a power generation system comprising the waste management system according to the invention and further comprising an oxidiser for the high-temperature oxidation of syngas and pyrogas generated from the pyrolysis feedstock to generate heat for power production.

Even further according to the invention, there may be provided a method of power generation according to the invention comprising the integrated method of waste management according to the invention, and preferably further comprising the step of:
(g) oxidising the syngas and/or pyrogas at high-temperature in an oxidiser to generate heat for power generation.

By having an integrated power generation system comprising an integrated waste management system according to the invention, all of the steps from the deposit at a waste processing plant of a source of a combustible waste material through to power generation (eg, electrical power generation from a conventional steam turbine unit) can be carried out at one site. This provides significant cost and resource savings because it reduces transportation costs (eg, between a waste separation plant, a waste drying plant and pyrolysis, gasification and oxidation/power generation plants) and it also enables improved overall energy efficiency through the provision of heat energy feedback loops between the various components of the systems.

Furthermore, combustion processes known in the art for power generation generally undergo pyrolysis, gasification and oxidation of syngas (or other combustion gases) as a single step process. In contrast, the system and method of power generation according to the present invention is adapted to separate the pyrolysis of a dried waste material pyrolysis feedstock, the gasification of the pyrolysis products and oxidation of the combustible gases from the gasification step. This allows a high degree of control over each step than in a single step process such as that which takes place in a conventional mass bum incinerator used for power generation.

A related integrated waste management system and the corresponding method carried out in separate steps are known from WO 2006/117824, which discloses a system comprising a source of a combustible waste material, a separator for separating the combustible waste material into fractions having different particle sizes, a drier for drying the combustible waste material to generate a pyrolysis feedstock, a pyrolyser for pyrolysing the pyrolysis feedstock to form char and pyrogas and a gasifier for converting the char and/or pyrogas into syngas.

The differences between the integrated waste management system and method according to the present invention and the system and method known from the above-mentioned document are that the separator is suitable for separating the combustible waste material from a recyclable material, the drier is an airless one and the system further comprises a means for supplying heated steam output from the airless drier generated during pyrolysis feedstock generation to the gasifier.

Furthermore, in the present invention, preferably all of the combustible waste material is heated in the pyrolyser or gasifier to a uniform temperature (typically 250 to 600 °C) not exceeding 900 °C. In conventional incineration on a hearth, there are often hot spots and cold spots resulting in some combustible waste material not being heated sufficiently and remaining unburnt in the resulting ash residue. Conversely, some of the combustible waste material may be overheated and may release toxic gaseous combustion by-products. In contrast, in the present invention it can be ensured that substantially all of the combustible waste material is thermally decomposed in the pyrolyser or gasifier. Also, that essentially none of the combustible waste material is overheated so that gaseous and/or volatile toxic pollutants are kept to a minimum.

Additionally, in accordance with the invention, combustion (oxidation) in the oxidiser is with a medium calorific value gas (ie, syngas and/or pyrogas) in a highly controlled oxidising environment with uniform oxidation temperatures. In this manner, hot spots and cold spots are again kept to a minimum or eliminated compared to the combustion zone in a conventional mass burn incinerator thereby resulting in substantially complete combustion of the gases with lower concentrations of carbon monoxide and volatile organic compounds in the exhaust gases emanating from the oxidiser. Furthermore, a uniform oxidation temperature results in the generation of lower levels of temperature-generated nitrogen oxides (thermal NOₓ), while the pyrolysis and gasification processes due to their reducing nature subdue the generation of fuel-generated nitrogen oxides (fuel NOₓ). Accordingly, the nitrogen oxide levels in the exhaust gases of the oxidiser used in the present invention are typically lower than that of a conventional mass burn incinerator.

Preferably, the separator used in accordance with the invention comprises one or more of a trommel, a magnetic separator, a ballistic separator, an eddy current separator, optical separation means and a shredder. This enables the adaptability of the invention to separating different types of waste dependent upon the waste composition. For example, waste from a source containing only household biowaste and paper-based waste may typically only require a separator comprising a trommel and a shredder. On the other hand, the same household biowaste which also contained recyclable plastics materials (eg, bottles, food wrappers, etc) may also include an automated optical separation component to separate these recyclable materials from the waste. Prior to separation of the combustible waste material into its various components, an automated bag opener may be used to open bags of waste material transported to a waste management plant from an external location such as a municipal refuse tip.

Preferably, the airless drier dries the combustible waste material with super-heated steam (typically at 135 to 145 °C) as the drying medium. In the airless drier, preferably drying is conducted in the absence of oxygen to prevent the combustion of the combustible waste material. Accordingly, preferably the airless drier substantially prevents the ingress of atmospheric air during a drying operation. To keep heat loss to a minimum, preferably the airless drier comprises an insulating outer surface to retain heat and to improve the overall energy efficiency of the system. Airless drying systems known in the art are described in GB 2 281 383 A and GB 2 378 498 A.

In the systems and methods of the invention, the combustible waste material typically has an initial moisture (eg, H₂O) content in the range of 30 to 40% by weight. After drying of the combustible waste material in the airless drier, preferably the pyrolysis feedstock has a moisture content of 0 to 20% by weight, more preferably 2 to 18% by weight, and even more preferably 5 to 15% by weight.

Preferably, the pyrolysis of the feedstock takes place at a temperature in the range of 250 to 600 °C. Char is the solid residue product of the incomplete combustion of organic materials. Pyrogas is typically defined as a combination of gases including methane, water vapour, carbon monoxide and hydrogen in addition to non-combusted volatile organic compounds present in the waste materials, including tars and other high molecular weight components.

Syngas (otherwise known as "synthesis gas") is defined as a pure or near pure mixture of carbon monoxide and hydrogen generated from the high-temperature reaction of carbon present in char or other organic compounds with water steam and air or oxygen. Preferably, gasification takes place at a temperature in the range of 850 to 900 °C

In one aspect of the invention, the airless drier comprises the pyrolyser. That is, the airless drier can be adapted with higher temperature (eg, 250 to 600 °C) settings than for its drying mode (eg, 110 to 150 °C) to act as a pyrolysis apparatus. This has the benefit of having one less component present in the system according to the invention, thus providing waste management plant space and cost savings.

The integrated waste management system includes an airless drier which generates heated steam output derived from the moisture extracted from the combustible waste material during the drying process, wherein a portion of the heated steam output which is otherwise released into the atmosphere is supplied to the gasifier to assist with the energy and reaction requirements of the gasifier by providing heat and water steam. This feature can contribute to the overall energy efficiency of the system according to the invention.

Preferably, the power generated according to the power generation system and method of the invention is electrical power. Preferably, electrical power production comprises the use of a steam cycle apparatus. The steam cycle apparatus may be a conventional steam turbine unit well-known to the person skilled in the art. A portion of the heated steam output of the airless drier can be used to pre-heat the steam cycle of a steam turbine unit. Furthermore, the steam cycle apparatus may be adapted to direct heat energy to assist the energy requirements of the airless drier. This may be achieved by a direct transfer of heat energy or via a heat retention unit. Again, each of these features may assist in contributing to the overall energy efficiency of the systems according to the invention.

The steam turbine unit will typically comprise a boiler designed to rapidly quench the exhaust gases which are generated in the oxidiser. Typically, this quenching of exhaust gas temperature is from 450 °C to 200 °C. Quenching over this temperature range preferably takes place in less than about 0.5 seconds. Rapid quenching of the exhaust gases is to minimise the potential for the *de novo* synthesis of toxic compounds such as dioxins and furans in the boiler, which may be released into the atmosphere creating a pollution hazard. Such *de novo* synthesis is also minimised because of the effectiveness of the sequential steps (eg, controlled temperature) of pyrolysis, gasification and oxidation steps of the power generation system of the invention, which assists in destroying the precursors of *de novo* synthesis at each step.

Preferably, the power generation system of the invention further comprises a flue gas remediation unit for trapping pollutants released in either the pyrolysis, gasification or oxidation steps. This is because environmental pollution legislation is likely to require flue gas remediation of acid gases (eg, HCl, SOₓ species, HF, etc), the removal of particulates and the reduction of NOₓ species from exhaust gases emanating from the oxidiser and/or steam turbine unit employed in the present invention. This can be achieved by means of conventional wet or dry scrubbers. In particular, a sodium bicarbonate reagent in addition to a bag filter may be used for the remediation of HCl, SO₂ and particulate matter from exhaust gases. The use of a selective catalytic reduction unit can be used for the remediation of NOₓ. A temperature of about 180 to 220 °C, and preferably about 200 °C, is typically the optimal temperature for both of the remediation processes.

If flue gases are exhausted from the steam turbine unit at greater than 200 °C, energy is wasted. Acordingly, a heat recovery unit may be incorporated in the systems according to the invention typically downstream of a steam turbine unit. In practice, the heat recovery unit cools down the exhaust gases to about 140 °C, thereby providing the option of directing heat energy to the airless drier for the heating of the superheated steam heating medium. This improves the overall efficiency of a plant operating the system according to the invention. Typically, 140 °C is selected as a suitable exhaust flue gas exit temperature. This helps to prevent unsightly pluming at a stack outlet, acid gas condensation and as well provides heat to the airless drier with a high temperature differential.

Alternatively, power may be generated according to the invention using apparatus utilising the organic rankine cycle, the stirling cycle, the brayton cycle, the direct combustion of syngas in a gas engine or a gas turbine, or in a fuel cell. Also, the provision of heat in the form of steam or hot water may be generated for process use or for refrigeration using absorption chillers.

In an aspect of the invention, the oxidiser preferably comprises an outlet and means for supplying surplus heat to the airless drier and/or the pyrolyser. This can contribute to the overall energy and operational efficiency of the system and enables the system to operate when local domestic power demand may be reduced (eg, at night time), but the on-going production of the pyrolysis feedstock, pyrogas, char and syngas is desired.

The source of the combustible waste material may be any domestic or industrial waste containing combustible materials. Such materials may be food scraps, paper, cardboard, plastics, rubber, clothing fabrics, garden waste and building materials such as wood. The combustible waste material is preferably an organic material.

The preparation of the combustible waste material for drying in the airless drier comprises the use of a separator. The separator may include one or more components adapted for separating waste materials with different physical properties. In particular, the separator may include a trommel (a rotatable cylinder comprising holes for separating materials by a pre-determined size) in series or alone for sorting the waste material by size, a ballistic separator for sorting the waste material by weight, magnets for extracting and eliminating ferrous metallic waste, an eddy current separator for extracting and eliminating non-ferrous metallic waste and an automated optical separator for extracting recyclable materials, such as plastics and glass. Valuable metallic wastes and recyclable plastics materials may be shipped elsewhere for recycling. Furthermore, waste material considered too large or too heavy for the airless drying process may be transferred to a shredder for size and weight reduction as appropriate prior to drying.

As an example of a separation step for the combustible waste material used in the system and methods according to the invention, a shipment of waste from a domestic refuse tip may be deposited in a trommel having holes of a pre-determined size (eg, 80 mm in diameter) in its wall. Rotation of the trommel about its longitudinal axis results in separation of the combustible waste material into a fine waste component (eg, < 80 mm) and a bulky waste component (eg, > 80 mm) dependent on the diameter of the trommel wall holes. The fine waste component is subjected to a magnetic separator for the extraction of non-combustible ferrous metals. It is then transferred to a vessel ready for feeding to the airless drier. The bulky waste component is processed so that metals, plastics, glass and other recyclable and/or non-combustible components are removed. The processed bulky component is then subjected to an automated optical separator to remove the remaining recyclable components and is then fed to a shredder for conversion to a material of similar particle size to the fine waste component. The shredded bulky waste component is then transferred to the vessel containing the fine waste component ready for drying in the airless drier.

The airless dryer used in the present invention may employ dry superheated steam as the heating medium for drying the combustible waste material. The use of super-heated steam in the airless drier has many benefits over a conventional air drier as follows.

Because the specific heat capacity of steam is more than twice that of air, more than twice the amount of heat can be transferred to the product being dried for the same mass flow of steam compared to heated air. As a result, with the same temperature differential between the moist combustible organic waste material and the drying medium, the fan power required to achieve a given heat transfer may be more than halved.

Further benefits of using super-heated steam are that due to its lower viscosity than air (about 50% lower), it is able to percolate through the combustible organic waste material being dried, thereby speeding up the drying process.

The airless dryer is typically a closed system which operates on full recirculation principles and not a combination of re-circulated water vapour/steam combined with ambient fresh air introduced during drying from outside the dryer. Furthermore, indirect fired heat exchangers may be used to prevent the ingress into the airless drier of ambient fresh air which may lead to undesirable combustion of the material being dried. Further, to prevent the ingress of ambient air (or significant quantities thereof) and steam leakage, the airless drier should be constructed with a high level of air tightness. The absence of oxygen-containing air in the drier during the drying process helps prevents the combustion or explosion of flammable products present in the combustible organic waste material during drying. The airless drier may be insulated to help prevent heat loss.

The pyrolyser indirectly heats the combustible waste material to a high temperature (typically at about 600 °C, but generally in the range of 250 to 600 °C) in the absence of air or oxygen. This may be achieved by passing the dried combustible waste material (pyrolysis feedstock) through a heated pyrolysis tube by means of an auger. The pyrolysis tube is contained within a pyrolysis chamber through which hot exhaust gases from the outlet of the oxidiser or another source may be passed. The hot exhaust gases pass over an outer surface of the pyrolysis tube and transfer heat to the tube by convection and radiation. The hot pyrolysis tube then transfers heat into the combustible waste material by conduction and radiation from an inner surface of the inner tube wall of the tube. The heat energy heats the combustible waste material typically to about 600 °C and thermally degrades the material to pyrogas and char. The absence of air or oxygen prevents the combustible waste material from combusting within the pyrolysis tube. The benefits of employing the pyrolyser in the present invention include the production of an excellent pyrolysis feedstock for the gasifier which is dry, hot, pre-pyrolysed and homogenous. This makes the subsequent operation of the gasifier simpler and more efficient.

Preferably, the pyrolysis chamber comprises an insulating outer surface to retain heat and to improve the overall energy efficiency of the systems and methods according to the invention.

In another aspect of the invention, the pyrolyser may have a modular design with a single pyrolysis tube or a plurality of pyrolysis tubes contained within a pyrolysis chamber and/or one pyrolysis chamber or a plurality of pyrolysis chambers. These arrangements can help to optimise the surface area in the pyrolyser to assist in the heat transfer from the heated gases from the outlet of the oxidiser or other source to the combustible waste material being pyrolysed, thereby improving the energy efficiency of the system.

The gasifier receives the char and pyrogas from the pyrolysis tube or tubes. The char typically exits the pyrolyser from an outlet in a pyrolysis tube and is transferred into the gasifier forming a char bed at a bottom inner surface of the gasifier. The gasifier is preferably an updraft gasifier type, wherein steam and air are injected at a lower surface of the char bed adjacent a bottom inner surface of the gasifier and percolates upwards through the char undergoing various chemical reactions and reducing the steam and char to syngas comprising mostly carbon monoxide and hydrogen. This reaction typically occurs at about 850 °C and is self-regulating by means of the endothermic and exothermic nature of competing reactions and their different reaction rates at different temperatures. The syngas combines with pyrogas from the pyrolyser in the headspace above the gasifier char bed and all gases are passed to the oxidiser by a pipe system. Residual ash containing a small amount of unreacted carbon is discharged from an outlet in the bottom inner surface of the gasifier into an airtight ash container to prevent uncontrolled ingress of air into the bottom of the gasifier. The residual ash is disposed of.

The advantage of using an updraft gasifier is that it enables a simple gasifier design and is less sensitive to particle size, homogeneity and moisture content than other types of gasifiers such as downdraft gasifiers or fluidised bed gasifier. The simple design of the updraft gasifier makes the gasifier easier to operate, more reliable and cheaper to build which are all advantages over other types of gasifier. However, a downdraft gasifier or a fluidised bed gasifier could if necessary also be used in accordance with the invention.

An updraft gasifier may further include a cyclone inducer for the headspace gases. This facilitates a very low particulate loading in the syngas or pyrogas which is transferred to the oxidiser for oxidising. The transfer of low levels of particulate material from the char present in the gasifier to the oxidiser further assists in minimising undesirable oxidation by-products from the exhaust gases of the oxidiser.

In one aspect of the invention, the gasifier may receive steam for driving the gasification process from the outlet of the airless drier in order to improve the overall energy efficiency of the systems and methods according to the invention.

Preferably the gasification chamber comprises an insulating outer surface to retain heat and to improve the overall energy efficiency of the systems and methods according to the invention.

In another aspect of the invention, the arrangement of the pyrolyser and gasifier may be modular such that one pyrolysis tube or a plurality of pyrolysis tubes may feed a gasifier and/or one gasifier chamber or a plurality of gasifier chambers may provide syngas to the oxidiser.

Syngas and pyrogas from the gasifier are supplied to the oxidiser by pipe. The oxidiser mixes the syngas and pyrogas with air where it is oxidised at high temperature to release chemical energy in the form of heat. The oxidiser outlet temperature is controlled by adjusting the amount of excess combustion air that is introduced into the oxidiser. Good combustion is achieved by ensuring that the syngas (or syngas/pyrogas mixture) and combustion air are mixed well in a turbulent (eg, cyclonic) environment with a long residence time at a high temperature. Typically, during the oxidation process, the oxidiser temperature is maintained at about 1250 °C, but it can be operated at temperatures as low as 850 °C. Typically, the residence time of the syngas (or syngas/pyrogas mixture) within the oxidiser is greater than 2 seconds. Typically, good mixing and turbulence are achieved by injecting the combustion air into the oxidiser at high velocity (greater than 20 m/s) and directing the jet of combustion air (or plurality of combustion air jets) into the centre of a syngas (or syngas/pyrogas mixture) injection port. The air and syngas (or syngas/pyrogas mixture) is injected tangentially to induce cyclonic rotation of the exhaust gases within the oxidiser. This further mixes the combusted exhaust gases and may also assist in trapping particulate materials present in the exhaust gases leading to a cleaner overall process.

Preferably, the oxidiser comprises an insulating outer surface to retain heat and to improve the overall energy efficiency of the systems and methods according to the invention.

Preferably, the system according to the invention (eg, in the form of a waste management or power generation plant) is maintained under negative pressure. This may be achieved with the use of one or more induced draft (ID) fans. The use of the ID fans helps to ensure process safety where a leak or other failure in the system does not result in gases exiting the system, but atmospheric air enters instead. Care is generally taken to back-up an ID fan function so that a plant employing the system of the invention is not left operating (and producing gas) without some negative pressure being maintained.

Specific embodiments of the present invention are further described with reference to the drawings, in which:
**Figure 1** is a schematic diagram of an embodiment of a power generation system according to the invention comprising a waste management system according to the invention.
Figure 2a is a schematic diagram of an embodiment of a waste management system according to the invention showing the preparation of an airless drier (wet) feedstock.
Figure 2b is a schematic diagram of a power generation system according to the invention comprising a waste management system according to the invention following on from the embodiment of Figure 2a with treatment of the airless drier (wet) feedstock through to power generation.

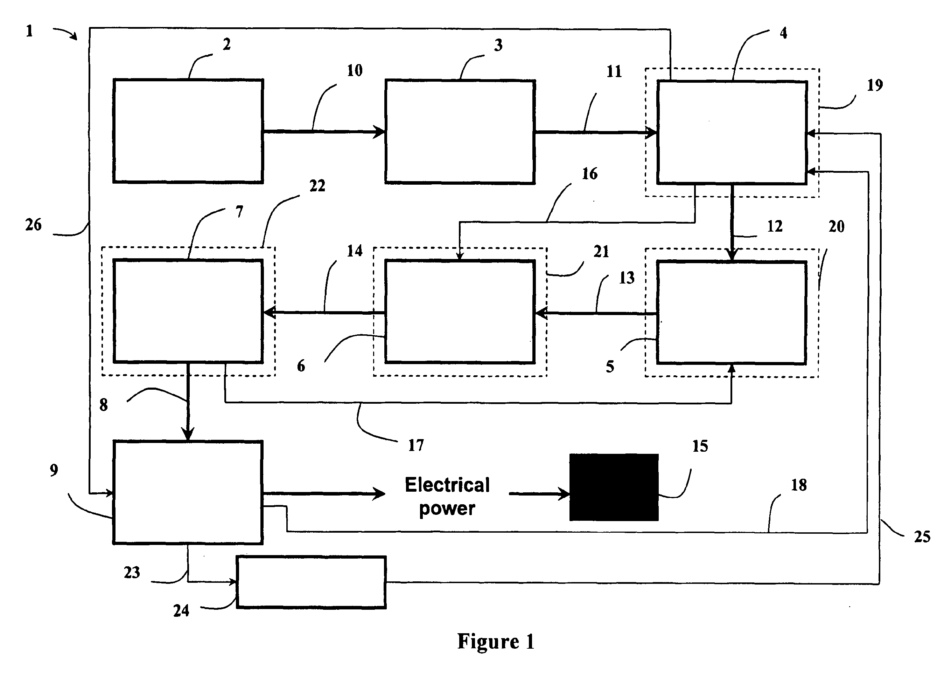

Referring to Figure 1, there is an electrical power generation system 1 having a combustible waste material source 2, a waste separator 3 for the combustible waste material and an airless drier 4 for drying the combustible waste material (not shown) to yield a pyrolysis feedstock (not shown).

System 1 has a pyrolyser 5 for producing char and pyrogas (not shown) from the pyrolysis feedstock, a gasifier 6 for producing syngas (not shown) from the char, and an oxidiser 7 for the high temperature (eg, ∼ 1250 °C) oxidation of the syngas and pyrogas in the presence of air to produce heat as depicted by arrow 8. The heat is used to generate electrical power from a conventional steam turbine unit 9.

In use, combustible waste material from source 2 is supplied along belt 10 to separation means 3 for separation into a combustible waste component and other waste materials of value including recyclable materials not for combustion, such as metal, glass, plastics, etc (not shown). The combustible waste component is then fed along belt 11 to airless drier 4 where it is dried at 110 to 150 °C using super-heated steam, until substantially all of the moisture (ie, primarily water) is removed from the combustible waste to yield the pyrolysis feedstock.

The pyrolysis feedstock is transferred to pyrolyser 5 along enclosed belt 12 for pyrolysis in an oxygen-free atmosphere at about 600 °C. Pyrolysis results in a mixture of char and pyrogas (not shown). The char and pyrogas are transferred to gasifier 6 along pipe 13. The char is gasified in gasifier 6 at about 850 °C resulting in hydrogen and carbon monoxide gaseous products (not shown) otherwise referred to as syngas. In an alternative embodiment, the airless drier 4 can also act as the pyrolysis apparatus when its operating temperature is increased to 600 °C.

The syngas and pyrogas may alternatively be stored for later use or else are transferred to oxidiser 7 along pipe 14 where combustion of the syngas and pyrogas takes place at about 1250 °C generating heat depicted by arrow 8 for driving steam turbine unit 9. Steam turbine unit 9 generates electrical power which is fed into electrical grid 15, which may be a localised grid (eg, in a factory or processing plant) or else part of a domestic power supply grid.

Dependent upon the current energy requirements, at various stages of system 1 excess heat energy 16,26 released by airless drier 4 or excess heat energy 17 released by oxidiser 7 can be selectively directed to assist the energy requirements of other components of system 1. Specifically, heat energy 16 in the form of steam evaporate can be directed to gasifier 6. Heat energy 26 in the form of steam evaporate can be directed to steam turbine unit 9 to preheat condensate return within the steam turbine unit. Heat energy 17 from oxidiser 7 can be directed to pyrolyser 5. Furthermore, excess heat energy 18 in the form of steam evaporate from turbine unit 9 can be directed to airless drier 4. Excess heat as depicted by arrow 23 can be be transferred to heat recovery unit 24 for transfer to airless drier 4 as depicted by arrow 25. These options for heat energy feedback enables a series of efficient heat energy feedback mechanisms contributing to the overall energy efficiency and adaptability of system 1.

To further enable the energy efficiency of system 1, the various components may be partially or fully covered with heat-resistant insulating layer 19,20,21,22 for improving heat retention in system 1.

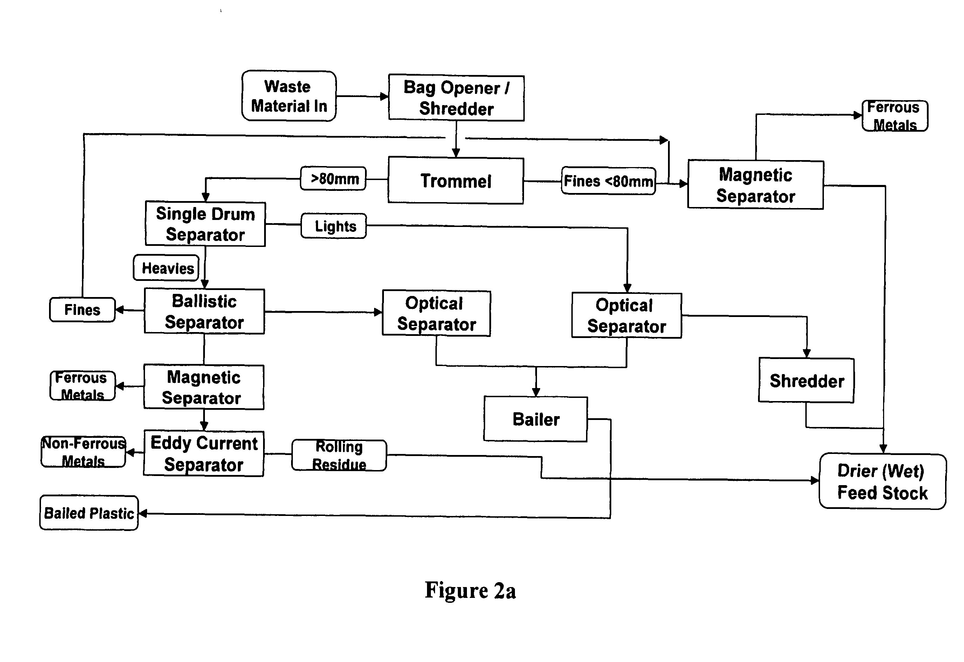

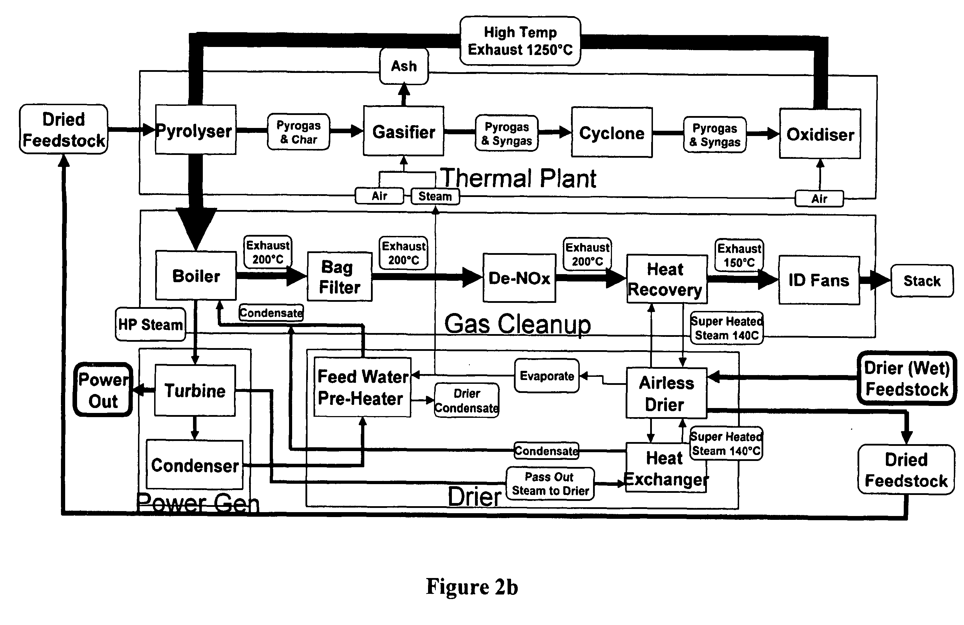

Referring to Figure 2a there is a schematic overview of an aspect of an further embodiment of the waste management system according to the invention, wherein a wet feedstock is generated for the airless drier (refer Figure 2b). Figure 2a shows the sequence of providing a combustible waste material and separation of the material into recyclable (combustible) components resulting in the drier (wet) feed stock as well as non-combustible components (eg, metals) or combustible waste components not desirable for combustion (eg, plastics).

Referring to Figure 2b there is a schematic overview of the continuation of the waste management process according to an embodiment of the present invention wherein the drier (wet) feed stock prepared according to the embodiment shown in Figure 2a is dried in an airless drier to yield a dried feedstock. The dried feedstock is pyrolysed to form char and pyrogas, the char and pyrogas is gasified to form pyrogas and syngas as well as an ash residue waste, and then the pyrogas/syngas mixture is mixed in a cyclone device prior to oxidisation with air to yield a high temperature exhaust for heating a boiler to drive a conventional turbine for power generation.

## Claims

1. An integrated waste management system (1), comprising:
a source (2) of a combustible waste material;
a separator (3) for separating the combustible waste material from a recyclable material;
an airless drier (4) for drying the combustible waste material to generate a pyrolysis feedstock;
a pyrolyser (5) for pyrolysing the pyrolysis feedstock to form char and pyrogas;
a gasifier (6) for converting the char and/or pyrogas into syngas, and
a means (16) for supplying heated steam output from the airless drier (4) generated during pyrolysis feedstock generation to the gasifier (6).

2. The integrated waste management system (1) according to claim 1, wherein the separator (3) comprises one or more of a trommel, a magnetic separator, a ballistic separator, an eddy current separator, automated optical separation means and a shredder.

3. The integrated waste management system (1) according to claim 1 or claim 2, wherein the airless drier (4) is adapted for drying the combustible waste material with super-heated steam as the drying medium.

4. The integrated waste management system (1) according to any one of claims 1 to 3, wherein the airless drier (4) is sealed to prevent the ingress of atmospheric air.

5. The integrated waste management system (1) according to any one of claims 1 to 4, wherein the airless drier (4) comprises an insulating outer surface.

6. A power generation system comprising the waste management system (1) according to any one of claims 1 to 5, further comprising an oxidiser (7) for the high-temperature oxidation of syngas and/or pyrogas generated from the pyrolysis feedstock to generate heat for electrical power production.

7. The power generation system according to claim 6, wherein the oxidiser (7) comprises an outlet for supplying surplus heat to:
(i) the airless drier (4); and/or
(ii) the pyrolyser (5).

8. The power generation system according to claim 6 or 7, wherein the airless drier (4) comprises an outlet for supplying steam evolved in the drying step of the airless drier to the gasifier (6).

9. The power generation system according to any one of claims 6 to 8, wherein the system comprises a steam cycle apparatus (9) such as a steam turbine unit for electrical power production.

10. The power generation system according to any one of claims 6 to 9, further comprising a heat recovery unit (24) for supplying excess heat energy to the airless drier (4), preferably from a steam cycle apparatus (9).

11. An integrated method of waste management comprising:
(a) providing a source (2) of a combustible waste material;
(b) separating the combustible waste material from a recyclable material present in the source (2);
(c) drying the combustible waste material in an airless drier (4) to generate a dried pyrolysis feedstock;
(d) pyrolysing the dried pyrolysis feedstock to form char and pyrogas;
(e) converting the char and/or pyrogas into syngas in a gasifier (6),
and
(f) supplying heated steam output from the airless drier (4) generated during pyrolysis feedstock generation to the gasifier (6).

12. The integrated method of waste management according to claim 11, wherein the combustible waste material is dried in the airless drier (4) with the use of super-heated steam.

13. The integrated method of waste management according to claims 11 or 12, wherein the combustible waste material is dried to yield a pyrolysis feedstock with a moisture content of 0 to 20% by weight, preferably 2 to 18% by weight, or more preferably 5 to 15% by weight.

14. A method of power generation comprising the integrated method of waste management according to any one of claims 11 to 13, wherein the power may be electrical power, and the electrical power generation may comprise use of a steam cycle.

15. The method of power generation according to claim 14, further comprising the step of:
(g) oxidising the syngas and pyrogas at high-temperature in an oxidiser (7) to generate heat for power generation.

## Patentansprüche

1. Integriertes Abfallentsorgungssystem (1), umfassend:
eine Quelle (2) eines brennbaren Abfallmaterials,
einen Abscheider (3) zum Trennen des brennbaren Abfallmaterials von einem wiederverwertbaren Material,
einen luftlosen Trockner (4) zum Trocknen des brennbaren Abfallmaterials, um einen Pyrolyserohstoff zu erzeugen,
eine Pyrolysevorrichtung (5) zum Pyrolysieren des Pyrolyserohstoffs zum Bilden von Kohle und Pyrolysegas,
einen Vergaser (6) zum Umwandeln der Kohle und/oder des Pyrolysegases in Synthesegas und
ein Mittel (16) zum Zuführen einer Ausgabe von erhitztem Dampf aus dem luftlosen Trockner (4), die während der Pyrolyserohstofferzeugung erzeugt wird, zu dem Vergaser (6).

2. Integriertes Abfallentsorgungssystem (1) nach Anspruch 1, wobei der Abscheider (3) einen oder mehrere der Folgenden aufweist: eine Siebtrommel, einen Magnetabscheider, einen ballistischen Separator, einen Wirbelstromabscheider, eine automatisierte optische Trennungsvorrichtung und einen Schredder.

3. Integriertes Abfallentsorgungssystem (1) nach Anspruch 1 oder Anspruch 2, wobei der luftlose Trockner (4) zum Trocknen des brennbaren Abfallmaterials mit Heißdampf als dem Trocknungsmittel ausgeführt ist.

4. Integriertes Abfallentsorgungssystem (1) nach einem der Ansprüche 1 bis 3, wobei der luftlose Trockner (4) abgedichtet ist, um das Eindringen von atmosphärischer Luft zu verhindern.

5. Integriertes Abfallentsorgungssystem (1) nach einem der Ansprüche 1 bis 4, wobei der luftlose Trockner (4) eine isolierende Außenfläche aufweist.

6. Energieerzeugungssystem, umfassend das Abfallentsorgungssystem (1) nach einem der Ansprüche 1 bis 5, das ferner eine Oxidationsvorrichtung (7) aufweist für die Hochtemperaturoxidation von Synthesegas und/oder Pyrolysegas, das aus dem Pyrolyserohstoff erzeugt wird, um Wärme für die Erzeugung elektrischer Energie zu erzeugen.

7. Energieerzeugungssystem nach Anspruch 6, wobei die Oxidationsvorrichtung (7) einen Auslass aufweist zur Zuführung von überschüssiger Wärme an:
(i) den luftlosen Trockner (4) und/oder
(ii) die Pyrolysevorrichtung (5).

8. Energieerzeugungssystem nach Anspruch 6 oder 7, wobei der luftlose Trockner (4) einen Auslass zur Zuführung von Dampf, der im Trocknungsschritt des luftlosen Trockners abgegeben wird, zu dem Vergaser (6) aufweist.

9. Energieerzeugungssystem nach einem der Ansprüche 6 bis 8, wobei das System eine Dampfzyklusvorrichtung (9) wie eine Dampfturbineneinheit zur Erzeugung elektrischer Energie aufweist.

10. Energieerzeugungssystem nach einem der Ansprüche 6 bis 9, das ferner eine Wärmerückgewinnungseinheit (24) zum Zuführen überschüssiger Wärmeenergie zu dem luftlosen Trockner (4), vorzugsweise aus einer Dampfzyklusvorrichtung (9), aufweiset.

11. Integriertes Abfallentsorgungsverfahren, umfassend:
(a) Bereitstellen einer Quelle (2) eines brennbaren Abfallmaterials,
(b) Trennen des brennbaren Abfallmaterials von einem in der Quelle (2) anwesenden wiederverwertbaren Material,
(c) Trocknen des brennbaren Abfallmaterials in einem luftlosen Trockner (4), um einen getrockneten Pyrolyserohstoff zu erzeugen,
(d) Pyrolysieren des getrockneten Pyrolyserohstoffs zum Bilden von Kohle und Pyrolysegas,
(e) Umwandeln der Kohle und/oder des Pyrolysegases in Synthesegas in einem Vergaser (6) und
(f) Zuführen einer Ausgabe von erhitztem Dampf aus dem luftlosen Trockner (4), die während der Pyrolyserohstofferzeugung erzeugt wird, zu dem Vergaser (6).

12. Integriertes Abfallentsorgungsverfahren nach Anspruch 11, wobei das brennbare Abfallmaterial in dem luftlosen Trockner (4) mithilfe von Heißdampf getrocknet wird.

13. Integriertes Abfallentsorgungsverfahren nach Anspruch 11 oder 12, wobei das brennbare Abfallmaterial getrocknet wird, um einen Pyrolyserohstoff mit einem Feuchtigkeitsgehalt von 0 bis 20 Gewichts-%, vorzugsweise 2 bis 18 Gewichts-% oder mehr vorzugsweise 5 bis 15 Gewichts-% zu ergeben.

14. Energieerzeugungsverfahren, umfassend das integrierte Abfallentsorgungsverfahren nach einem der Ansprüche 11 bis 13, wobei die Energie elektrische Energie sein kann und die Erzeugung elektrischer Energie die Nutzung eines Dampfzyklus aufweisen kann.

15. Energieerzeugungsverfahren nach Anspruch 14, das ferner den folgenden Schritt aufweist:
(g) Oxidieren des Synthesegases und des Pyrolysegases bei hoher Temperatur in einer Oxidationsvorrichtung (7), um Wärme für die Energieerzeugung zu erzeugen.

## Revendications

1. Système intégré de gestion de déchets (1) comprenant :
une source (2) d'un matériau de déchet combustible ;
un séparateur (3) pour séparer le matériau de déchet combustible d'un matériau recyclable ;
une sécheuse sans air (4) pour sécher le matériau de déchet combustible afin de générer une charge d'alimentation de pyrolyse;
un pyrolyseur (5) pour pyrolyser la charge d'alimentation de pyrolyse afin de former un résidu charbonneux et un pyrogaz ;
un gazéificateur (6) pour convertir le résidu charbonneux et/ou pyrogaz en gaz de synthèse ; et
un moyen (16) pour fournir une vapeur chauffée sortant de la sécheuse sans air (4) générée durant la génération d'une charge d'alimentation de pyrolyse au gazéificateur (6).

2. Système intégré de gestion de déchets (1) selon la revendication 1, dans lequel le séparateur (3) comprend un ou plusieurs d'un tamis rotatif, d'un séparateur magnétique, d'un séparateur balistique, d'un séparateur à courants de Foucault, d'un moyen de séparation optique automatisé et d'un déchiqueteur.

3. Système intégré de gestion de déchets (1) selon la revendication 1 ou la revendication 2, dans lequel la sécheuse sans air (4) est adaptée pour sécher le matériau de déchet combustible avec une vapeur surchauffée comme moyen de séchage.

4. Système intégré de gestion de déchets (1) selon l'une quelconque des revendications 1 à 3, dans lequel la sécheuse sans air (4) est scellée pour empêcher l'entrée de l'air atmosphérique.

5. Système intégré de gestion de déchets (1) selon l'une quelconque des revendications 1 à 4, dans lequel la sécheuse sans air (4) comprend une surface externe isolante.

6. Système de génération de puissance comprenant le système de gestion de déchets (1) selon l'une quelconque des revendications 1 à 5, comprenant en outre un dispositif d'oxydation (7) pour l'oxydation à haute température d'un gaz de synthèse et/ou d'un pyrogaz généré par la charge d'alimentation de pyrolyse afin de générer de la chaleur pour la production de puissance électrique.

7. Système de génération de puissance selon la revendication 6, dans lequel le dispositif d'oxydation (7) comprend une sortie pour fournir un surplus de chaleur :
(i) à la sécheuse sans air (4) ; et/ou
(ii) au pyrolyseur (5).

8. Système de génération de puissance selon la revendication 6 ou 7, dans lequel la sécheuse sans air (4) comprend une sortie pour fournir au gazéificateur (6) une vapeur générée à l'étape de séchage de la sécheuse sans air.

9. Système de génération de puissance selon l'une quelconque des revendications 6 à 8, dans lequel le système comprend un appareil à cycle de vapeur (9) tel qu'une unité de turbine à vapeur pour la production de puissance électrique.

10. Système de génération de puissance selon l'une quelconque des revendications 6 à 9, comprenant en outre une unité de récupération de chaleur (24) pour fournir une énergie de chaleur excédentaire à la sécheuse sans air (4), de préférence à partir d'un appareil à cycle de vapeur (9).

11. Procédé intégré de gestion de déchets comprenant :
(a) la fourniture d'une source (2) d'un matériau de déchet combustible ;
(b) la séparation du matériau de déchet combustible d'un matériau recyclable présent dans la source (2) ;
(c) le séchage du matériau de déchet combustible dans une sécheuse sans air (4) afin de générer une charge d'alimentation de pyrolyse séchée ;
(d) la pyrolyse de la charge d'alimentation de pyrolyse séchée afin de former un résidu charbonneux et un pyrogaz ;
(e) la conversion du résidu charbonneux et/ou du pyrogaz en gaz de synthèse dans un gazéificateur (6), et
(f) la fourniture d'une vapeur chauffée sortant de la sécheuse sans air (4) générée durant la génération de la charge d'alimentation de pyrolyse au gazéificateur (6).

12. Procédé intégré de gestion de déchets selon la revendication 11, dans lequel le matériau de déchet combustible est séché dans la sécheuse sans air (4) au moyen d'une vapeur surchauffée.

13. Procédé intégré de gestion de déchets selon la revendication 11 ou 12, dans lequel le matériau de déchet combustible est séché pour produire une charge d'alimentation de pyrolyse ayant une teneur en humidité de 0 à 20% en poids, de préférence de 2 à 18% en poids, ou idéalement de 5 à 15% en poids.

14. Procédé de génération de puissance comprenant le procédé intégré de gestion de déchets selon l'une quelconque des revendications 11 à 13, dans lequel la puissance peut être une puissance électrique, et la génération de puissance électrique peut comprendre l'utilisation d'un cycle de vapeur.

15. Procédé de génération de puissance selon la revendication 14, comprenant en outre l'étape consistant en :
(g) l'oxydation du gaz de synthèse ou du pyrogaz à haute température dans un dispositif d'oxydation (7) pour générer de la chaleur pour la génération de puissance.
